(19)

Europäisches
Patentamt
European
Patent Office
Office européen
des brevets

(11) **EP 2 982 659 A1**

(12) **EUROPEAN PATENT APPLICATION**
published in accordance with Art. 153(4) EPC

(43) Date of publication:
**10.02.2016 Bulletin 2016/06**

(21) Application number: **14780192.2**

(22) Date of filing: **02.04.2014**

(51) Int Cl.:
***C04B 28/02*** *(2006.01)*

(86) International application number:
**PCT/ES2014/070260**

(87) International publication number:
**WO 2014/162035 (09.10.2014 Gazette 2014/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.04.2013 ES 201330469**

(71) Applicant: **Arraela S.L.**
**15623 La Coruna (ES)**

(72) Inventor: **CARUNCHO RODADO, Juan Manuel**
**E-15623 La Coruña (ES)**

(74) Representative: **Del Valle Valiente, Sonia**
**C/ Miguel Angel Cantero Oliva, 5,53**
**28660 Boadilla del Monte-Madrid (ES)**

(54) **HEAT-ENERGY-ACCUMULATING MATERIAL**

(57)    The invention relates to a material that can accumulate heat energy at high temperatures without losing its structural capacities. The material is fundamentally concrete formed by a mixture of cement, aggregates and water by means of high-frequency vibration, and comprises a proportion of aggregates which corresponds to between 70% and 85% of the total volume of the dry mixture, where the aggregates are classed as fine aggregates having a diameter of less than 8mm and coarse aggregates having a diameter of between 8mm and 25mm, the granulometry of the dry mixture presenting deviations from the Bolomey curve of less than 5% in the end thirds of the granulometry and less than 10% in the middle third of the granulometry.

EP 2 982 659 A1

**Description**

## OBJECT OF THE INVENTION

The present invention belongs, in general, to the field of construction materials and more specifically to concretes.
The object of the present invention is a novel material capable of accumulating heat energy at high temperatures without losing the structural capacities thereof.

## BACKGROUND OF THE INVENTION

In a thermosolar plant, large blocks of heat energy accumulating materials are used for storing part of the heat of the fluid which the collectors have heated. This fluid passes through pipes embedded in the interior of the accumulator blocks such that during the day the fluid heated by the collectors releases energy to the accumulator blocks while during the night, the flow of heat inverts and it is the accumulator blocks that release the heat to the fluid. This allows the plant to continue functioning during the night, with which the global performance thereof is considerably increased.
In any case, it can be said in a general manner that the most important characteristics which a heat accumulating material should have are a high absorption and heat accumulation capacity at high temperatures, suitable heat conductivity so that the energy accumulated is manageable and a mechanical resistance at high temperatures sufficient for the specific use in each case. From the structural point of view, the material should have suitable characteristics for the construction of the elements for which it is intended, namely, salt accumulator tanks, autonomous blocks, energy collectors, etc...
At present, so-called refractory concretes are known. However, these materials have the drawback of cracks or microcracks appearing when subjected to high temperatures. These cracks, even in spite of not seriously affecting the structural capacity of the material, cause a high loss of heat conductivity due to the breakage of the corresponding heat bridges. As a consequence of this situation, these concretes are being used in the majority of cases as simple structures resistant to high temperatures and fundamentally as prefabricated elements for the confinement of spaces at high temperatures (ovens, muffles, domestic radiators...).
We understand that there exists a need for a material in the family of refractory concretes which, apart from maintaining the suitable structural capacities, is capable of providing a high heat accumulation capacity, a high conductivity and which is configured as a fundamental piece in energetic management.

## DESCRIPTION OF THE INVENTION

The inventor of the present application has developed a heat energy accumulating material with a composition similar to concrete which is capable of absorbing and accumulating, in an efficient manner, large quantities of heat without losing the structural resistance thereof at high temperatures, being able to reach more than 1,200° C without losing the heat and structural capacities thereof.
A first aspect of the invention is directed at a material fundamentally based on a mixture of cement, aggregates and water obtained from high frequency vibrating, where the proportion of aggregates corresponds to between 70% and 85% of the total volume of the dry mixture, the granulometry of dry mixture having deviations in relation to the Bolomey granulometric curve of less than 5% in the thirds at the ends of the granulometry and less than 10% in the central third of the granulometry. The mean size of the aggregates used would be between half and one third of the smallest dimension of the prefabricated product with a maximum size of 25 mm, the prefabricated product being a piece of concrete produced in a mold, not in bulk.
In this context, the aggregates used are classified as fine aggregates of less than 8 mm in diameter and thick aggregates of between 8 mm and 25 mm in diameter. According to the preferred embodiments of the invention, these aggregates can be, in a general manner, any aggregate with a high iron content, such as for example magnetite, hematite or iron grit. Furthermore, as is described further on in the present document, the inventor of the present application has discovered that by modifying the relation between fine and thick aggregates, the properties of the material can be modified to adapt it to the use thereof at different temperature ranges, for example as an accumulating material for thermosolar plants, autonomous accumulator blocks and collection systems.
The Bolomey granulometric curve is a calibration curve which allows the maximum compaction of the different granular elements containing the material to be obtained. Unlike previous theories, such as the Fuller theory, the Bolomey curve takes in account the cement as if it were one more aggregate, which allows better results to be obtained. The Bolomey curve is fundamentally defined by the following expression:

$$y = a + (100 - a) \times \sqrt{\dfrac{d}{D}}$$

wherein:

y: % which passes
d: series of sieves
D: sieve which corresponds to the maximum size of the aggregate
a: a parameter which depends on the consistency of the concrete and on the type of aggregate used

The values of "a" in the Bolomey parabola vary as a function of the type of aggregate and on the consistency of the concrete.

| Values of "a" in the Bolomey parabola | | |
|---|---|---|
| Consistency of the concrete | Pebble aggregates | Crushed aggregates |
| Dry and plastic | 10 | 12 |
| Soft | 11 | 13 |
| Fluid | 12 | 14 |

The granulometry of the material of the invention fundamentally follows the Bolomey curve, the permissible deviations of said curve being limited by the previously mentioned percentages: 5% in the thirds at the ends and 10% in the central third.

In terms of the high frequency vibrating, it is vibrating carried out at a frequency greater than 3,500 rpm, the frequencies close to 7,000 rpm being optimal. This vibrating must have short impulses to avoid the separation of the thick aggregates.

Additionally, in a preferred embodiment of the invention, between 4 kg/m$^3$ and 12 kg/m$^3$ of slate rock fiber with a length of between 50 mm and 100 mm can be added to the material. The addition of slate rock fiber allows the resistance of the material of the invention to be increased. The slate rock fiber is a reinforcement mechanically compatible with the concrete and with the temperature which provides an improvement to the structural behaviors of the concrete at high temperatures and in addition, is resistant to the molten salts.

Furthermore, the variation of the relation between the quantities of fine aggregates and thick aggregates allows the properties of the resulting material to be modified in order to adapt them to the use thereof at different temperatures. In fact, it has been discovered that a high percentage of fine aggregates contribute to obtaining a greater compaction of the mixture and therefore a greater heat accumulation capacity, although there is a need to be especially vigilant so that the density of the product produced and therefore the total calorific capacity thereof does not reduce. However, a high compaction also impacts on the maximum temperature which the material can endure without losing the structural stability thereof, since the more compact it is, the lower the capacity thereof is to endure the tensions in the structure which the very high temperatures cause, possibly producing cracks.

Taking into account these factors, three material have been developed and tested which are compatible with the use thereof in thermosolar plants in three specific temperature ranges, each one of these materials being characterized by the relation between the quantities of fine and thick aggregates and more specifically by said fine/thick relation in the fraction corresponding to 1/3 of the lower part of the Bolomey curve. In this context, the term "compatible" relates to the fact that the expansions which the material experiences as a result of the temperature changes to which it is subjected are compatible with the expansions which the metallic pipes or reinforcements, embedded in the interior thereof, experience. These three materials are the following:

a) A first material designed to be compatible with carbon steel reinforcements or pipes in temperature cycles from 50° C to 250° C which comprise a fine/thick relation of approximately 0.5.

This configuration corresponds to a use similar to that of a heat accumulator in thermosolar plants, the heat carrier fluid of which is oil and which function in cycles of 50° C to 250° C. In this case, the material has, embedded in the interior thereof, carbon steel pipes through the interior of which the oil passes. Additionally, if the structure to be produced so requires, a reinforcement of between 10 mm and 25 mm is also used with a pultruded slate fiber diameter to provide structural resistance to the product produced. The specific relation between fine aggregates and thick aggregates of this material causes the behavior thereof during the heat cycle to which it is subjected to be compatible with the behavior of the pipes or reinforcements embedded in the interior thereof.

This first material can be produced using refractory cement with a content of $Al_2O_3$ of between 35% and 51% as a base. Also, as a much more economical alternative, it has been checked that the properties thereof continue being maintained if Portland cement is used. Note that Portland cement is in order of ten times more economical than refractory cement.

b) A second material designed to be compatible with carbon steel reinforcements or pipes in temperature cycles from 250° C to 400° C which comprise a fine/thick relation of approximately 0.6.

Within this temperature range it is important that the expansion, which develops with the temperature, follows the same type of development both in the material and in the carbon steel reinforcements or pipes. The difference of gradients in the expansion between the carbon steel and the material must be compensated with the occlusion of air within the material such that these occlusions are those which absorb the tensions generated by the gradients.

This configuration corresponds to a use as accumulator concrete in any of the applications thereof (thermosolar plants, autonomous blocks, heat collectors...) where the heat carrier fluid continues being oil and which function in cycles of 250° C to 400° C, the expansions of the material at these temperatures being compatible with the expansions experienced by the carbon steel pipes embedded in the interior thereof.

Furthermore, if the structure so requires, a carbon steel reinforcement of no more than 15 mm can also be used. If the reinforcements are made of "skin", the diameter thereof should not exceed 10 mm. A reinforcement made of "skin" is that which is between 5 cm and 9 cm from the exterior faces of the product produced. The reinforcement, if it is required, can be supported by slate rock fiber of at least 60 mm in length which can act individually.

c) A third material designed to be compatible with stainless steel reinforcements or pipes in temperature cycles from 350° C to 600° C, which comprises a fine/thick relation of approximately 0.75.

In general, the performance of a thermosolar plant is greater, the greater the temperature at which it works. At present, due to the fact that the heat carrier fluid used by the current thermosolar plants is oil, the maximum working temperature is limited by the temperature at which the oil is decomposed and starts to lose its properties, being around 390° C. However, the development of this technology is directed at the use of molten salts instead of oil, which would allow the working temperature to be raised to 600° C.

At present, there already exist plants in development designed to function in the range of temperatures of 350° C to 600° C. However, in these plants, the use of molten salt prevents using carbon steel pipes, since this material is not compatible with the molten salts. It is thus envisaged that such thermosolar plants use stainless steel pipes, more specifically stainless titanium or hydrogen steel.

In view of this, the inventor of the present application has developed a third accumulator material where the fine/thick relation is approximately 0.75, the expansions thereof in the heat cycle of 350° C to 600° C are compatible with the expansions which the stainless steel pipes experience, through the interior of which the molten salts run.

Furthermore, if the structure so requires, a carbon steel reinforcement of no more than 12 mm can be used. If the reinforcements are made of "skin", this should not exceed 10 mm. The carbon steel or stainless steel reinforcements in this heat range are formed of dense metallic wool and pressed with a thickness of 2.5 mm as a maximum. The reinforcement, if it is required, can be supported by slate rock fiber of at least 60 mm in length which can act individually.

In accordance with a preferred embodiment, the cement used for the production of the second and third material is refractory cement with a content of $Al_2O_3$ of between 35% and 51%. However, in these two materials, Portland cement cannot be used, since this is dehydrated and loses its properties at temperatures greater than 250° C.

Furthermore, these three materials are compatible with one another and compatible in contact with the molten salts ($NaNO_3$ + $KNO_3$), the structural resistance thereof even being able to increase as is shown further on in this document.

In another preferred embodiment, the material of the invention also comprises no more than 10% of filling material formed by the aggregates finely crushed to sizes of between 60 $\mu$m and 120 $\mu$m. The addition of the filling material serves to increase the mechanical resistance and basically the density, provided it is added within the indicated range.

In another more preferable embodiment, the material of the invention also comprises water-reducing plasticizing additives.

In another more preferable embodiment, the material of the invention comprises metallic fiber with the aim of increasing the structural parameters.

The material of the invention is very useful in applications, such as heat accumulators for heating systems, ovens both in the field of ceramics both professional or industrial and artisanal, development of heating systems of the cabins of long-distance trucks as well as those with hospitality or foodstuff application due to the absence of toxicity of the components thereof and other similar applications. As has been mentioned, the main field of application is related to energy production plants and in particular it is especially suitable for the construction of molten salt tanks for thermosolar plants, autonomous blocks for heat accumulation of the same plants with different accumulation system, systems for energetic use in thermal plants, etc.

A second aspect of the invention is directed at a method for producing a heat energy accumulating material as the one previously described, which comprises the step of applying a high frequency vibration to the mixture. As has been mentioned previously, these high frequency vibrations have the advantage of compacting the concrete mass and avoiding the segregation of the thick aggregates provided it is done at short time intervals. Preferably, the vibration is carried out at a frequency of more than 3,000 rpm, the optimal frequency being approximately 7,000 rpm.

## BRIEF DESCRIPTION OF THE FIGURES

Fig. 1 shows a graphic which represents the specific heat against the temperature of an exemplary material produced using refractory cement.
Fig. 2 shows a graphic which represents the specific heat against the temperature of an exemplary material produced using Portland cement.

## PREFERRED EMBODIMENT OF THE INVENTION

A table is shown below which specifically states the quantities of the different components of the material of the invention. Some of the quantities are indicated as percent by volume and other as percentage by weight. This is due to the fact that this is how each one of these is usually stated in the industry and in the different standards.

The first table shown corresponds to the composition of an embodiment of the material of the invention based on refractory cement, while the second table corresponds to the composition of a second embodiment of the material of the invention based on Portland cement.

| Component | % Volume | % Weight |
|---|---|---|
| Refractory cement | 10.5-12.5 | 8.3-10.5 |
| Water | | 0.33-0.43 (water/cement relation) |
| Aggregates | 70-80 | |
| Slate rock fiber | 4-12 kg/m$^3$ | |
| Additives | | |
| Filling aggregates (Filler) | | Less than 10% of the fine fraction of the aggregate |

Accumulator material obtained from refractory cement

| Component | % Volume | % Weight |
|---|---|---|
| Portland cement | 10-11 | 7-8 |
| Water | | 0.4-0.5 (water/cement relation) |
| Aggregates | 75-85 | |
| Slate rock fiber | 4-12 kg/m$^3$ | |
| Additives | * | |
| Filling aggregates (Filler) | | Less than 10% of the fine fraction of the aggregate |
| *Superplasticizing, self-compacting, aerating, metallic fiber additives. According to recommendations from the manufacturer based on the final design of the product produced. | | |

Accumulator material obtained from Portland cement

As previously mentioned, the aggregates, generally, represent 70% to 85% of the volume of the material, they can be divided into fine aggregates (between 0 mm and 8 mm in diameter) and thick aggregates (between 8 mm and 25 mm in diameter). As previously mentioned, the relation by weight between fine aggregates and thick aggregates will be, according to the type of concrete material which is desired to be produced, between 0.5 to 0.75. That is to say, the weight of the fine aggregates will be between 0.5 times and 0.75 times the weight of the thick aggregates.

The water/cement relation of the material of the invention is rather lower, as is observed in the table less than 0.43, producing a rather dry mass. In order to ensure the complete compaction of the different elements which form the material, the production method requires, in addition to the conventional steps in the production of concrete, a high frequency vibration to avoid the segregating of the different elements. The final density of this material can be up to 4.25 kg/dm3, having properties with a high calorific capacity and heat conductivity.

The figures show the behavior of the specific heat ($c_P$) of two examples of the material of the invention produced respectively from refractory cement and Portland cement as a function of the temperature.

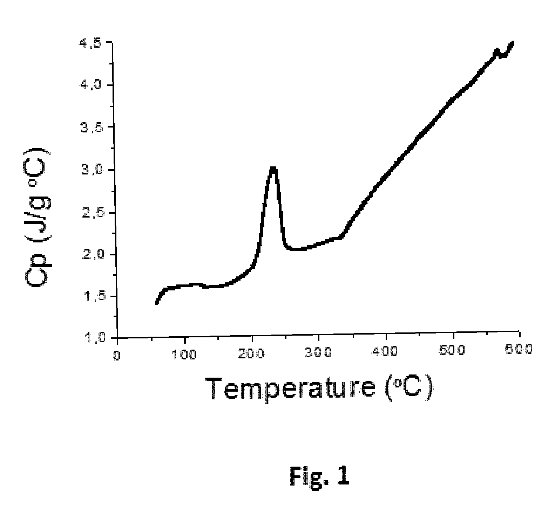

The graphic of Fig. 1 shows how the material of the invention produced with refractory cement, the quantity of which must be between 280 and 420 kg/m$^3$ with a w/c relation of 0.33 to 0.43, allowing calorific capacities up to approximately 4.30 J/(g°C) to be obtained while maintaining the mechanical properties thereof. This contrasts with the materials used at present, the specific heat and density of which are less, which makes the calorific capacity of the material noticeably lower. A table is shown below with the characteristics of some accumulator materials used at present where the difference in the calorific capacity in relation to the material of the invention is evident.

| Material | Density (kg/m3) | cp (J/g °C) | Cp (J/m3) |
|---|---|---|---|
| Heatek | 4000 | 2 | 8000 |
| DLR concrete | 3400 | 0.94 | 3196 |
| Sales | 1900 | 1.49 | 2831 |

Furthermore, it is observed how not only the calorific capacity of this material is already increased to moderate temperatures of around 100° C to 200° C, but said calorific capacity also develops as the temperature increases, consequently it is an excellent material for the use thereof in very high temperature cycles.

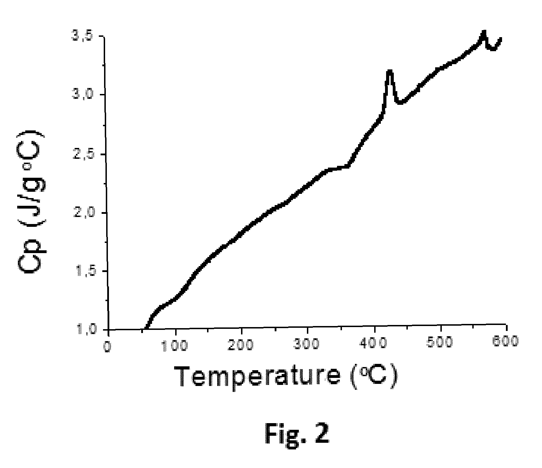

The graphic in Fig. 2 shows how the material of the invention is produced from Portland cement. In this case, between 280 and 320 kg/m$^3$ of Portland cement should be used with a w/c relation of 0.4 to 0.5. Excellent calorific capacities are also observed in the temperature range of 50° C to 250° C where it is operative. Note that, as has been previously mentioned, Portland cement is dehydrated from 250° C, consequently it is not possible to use it at greater temperatures.

Lastly, a table showing the resistance to the compression of the material of the invention in different conditions is shown below. It is observed how the material of the invention, when it is immersed in molten salts, not only does not lose resistance, but the resistance increases. This fact is due to the fact that the molten salts themselves disseminate through the interior of the microcracks which are produced, going to form part of the material, the air occlusions thus disappearing.

| Treatment | Resistance to compression (MPa) |
|---|---|
| Normal curing (ambient temperature) | 75 |
| Oven (450° C) | 55 |
| Immersion in molten salts at 400° | 110 |

**Claims**

1. A heat energy accumulating material which comprises a mixture of cement, aggregates and water, **characterized in that** it is obtained from a high frequency vibration and **in that** the material comprises a proportion of aggregates which corresponds to between 70% and 85% of the total volume of the dry mixture, where the aggregates are classified as fine aggregates of at least 8 mm in diameter and thick aggregates of between 8 mm and 25 mm in diameter, the granulometry of the dry mixture having deviations in relation to the Bolomey curve of less than 5% in the thirds at the ends of the granulometry and less than 10% in the central third of the granulometry.

**2.** The heat energy accumulating material according to claim 1, which also comprises between 4 kg/m$^3$ and 12 kg/m$^3$ of slate rock fiber with a length of between 50 mm and 100 mm.

**3.** The heat energy accumulating material according to any one of the preceding claims, wherein the aggregates are selected from the following list: magnetite, hematite and iron granules.

**4.** The heat energy accumulating material according to any one of the preceding claims compatible with carbon steel reinforcements or pipes in temperature cycles from 50° C to 250° C, the fine/thick relation thereof is approximately 0.5.

**5.** The heat energy accumulating material according to claim 4, which also comprises a pultruded slate fiber reinforcement of between 10 mm and 25 mm in diameter.

**6.** The heat energy accumulating material according to any one of claims 4 to 5, wherein the cement is refractory cement with a content of $Al_2O_3$ of between 35% and 51% or Portland cement.

**7.** The heat energy accumulating material according to any one of claims 1 to 3, compatible with carbon steel reinforcements or pipes in temperature cycles from 250° C to 400° C, the fine/thick relation thereof is approximately 0.6.

**8.** The heat energy accumulating material according to claim 7, which also comprises a carbon steel reinforcement of no more than 15 mm in diameter.

**9.** The heat energy accumulating material according to any one of claims 1 to 3, compatible with stainless steel reinforcements and pipes in temperature cycles from 350° C to 600° C, which comprises a fine/thick relation of approximately 0.75.

**10.** The heat energy accumulating material according to claim 9, which also comprises a carbon steel reinforcement of no more than 12 mm in diameter.

**11.** The material according to any one of claims 7 to 10, wherein the cement used is refractory cement with a content of $Al_2O_3$ between 35% and 51%.

**12.** The material according to any one of the preceding claims, which also comprises less than 10% of filling material formed by aggregates finely crushed to sizes of between 60 μm and 120 μm.

**13.** The heat energy accumulating material according to any one of the preceding claims, which also comprises water-reducing plasticizing additives.

**14.** The heat energy accumulating material according to any one of the preceding claims, which also comprises metallic fiber.

**15.** A production method for a heat energy accumulating material according to any one of the preceding claims, which comprises the step of applying a high frequency vibration to the mixture.

**16.** The production method according to claim 15, wherein said vibration is carried out at a frequency greater than 3,500 rpm.

**17.** The production method according to claim 16, wherein the vibration is carried out at a frequency of essentially 7,000 rpm.

Fig. 1

Fig. 2

## INTERNATIONAL SEARCH REPORT

| International application No. |
| --- |
| PCT/ES2014/070260 |

### A. CLASSIFICATION OF SUBJECT MATTER

*C04B28/02* (2006.01)

According to International Patent Classification (IPC) or to both national classification and IPC

### B. FIELDS SEARCHED

Minimum documentation searched (classification system followed by classification symbols)
C04B

Documentation searched other than minimum documentation to the extent that such documents are included in the fields searched

Electronic data base consulted during the international search (name of data base and, where practicable, search terms used)

INVENES, WPI, EPODOC, XPESP, TXTEP1, TXTGB1, TXTUS2, TXTUS3, TXTUS4

### C. DOCUMENTS CONSIDERED TO BE RELEVANT

| Category* | Citation of document, with indication, where appropriate, of the relevant passages | Relevant to claim No. |
| --- | --- | --- |
| A | ES 2346031 A1 (FRADERA PELLIVER CARLOS PELLICER CARLOS F) 07/10/2010, page 1, lines 55 - 65; page 2, lines 29 - 35; | 1-17 |
| A | BASE DE DATOS WPI EN EPOQUE, AN 2002-181696, JP2001206755 (NIPPONMAINTECHYG), 31.07.2001, abstract | 1-17 |
| A | BASE DE DATOS WPI EN EPOQUE, AN 2006-534332, KR20050077552 (DAHIMI IND INC), 03.08.2005, abstract | 1-17 |
| A | BASE DE DATOS WPI EN EPOQUE, AN 2011-F85636, CN102029641 (TIANJIN ZEBAO CEMENT PROD CO LTD), 21.04.2011, abstract | 1-17 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 09/05/2014 | **(12/05/2014)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | J. García Cernuda Gallardo Telephone No. 91 3495352 |

Form PCT/ISA/210 (second sheet) (July 2009)

## INTERNATIONAL SEARCH REPORT

| | International application No. |
|---|---|
| | PCT/ES2014/070260 |

**C (continuation).** DOCUMENTS CONSIDERED TO BE RELEVANT

| Category * | Citation of documents, with indication, where appropriate, of the relevant passages | Relevant to claim No. |
|---|---|---|
| A | BASE DE DATOS WPI EN EPOQUE, AN 102643055, CN102643055 (CHINA ELECTRIC POWER RES INST), 22.08.2012, abstract | 1-17 |

Form PCT/ISA/210 (continuation of second sheet) (July 2009)

## INTERNATIONAL SEARCH REPORT

Information on patent family members

| International application No. |
|---|
| PCT/ES2014/070260 |

| Patent document cited in the search report | Publication date | Patent family member(s) | Publication date |
|---|---|---|---|
| ES2346031 A1 | 07.10.2010 | RU2011144829 A | 20.05.2013 |
| | | US2012031308 A1 | 09.02.2012 |
| | | WO2010116009 A1 | 14.10.2010 |
| | | EP2418188 A1 | 15.02.2012 |
| | | EP2418188 A4 | 04.09.2013 |
| | | CN102378743 A | 14.03.2012 |
| | | CA2757397 A1 | 14.10.2010 |
| JP2001206755 A | 31.07.2001 | NONE | |
| KR20050077552 A | 03.08.2005 | KR100572511B B1 | 19.04.2006 |
| CN102029641 A | 27.04.2011 | NONE | |
| CN102643055 A | 22.08.2012 | NONE | |

Form PCT/ISA/210 (patent family annex) (July 2009)